# EUROPEAN PATENT APPLICATION

(11) **EP 2 100 521 A1**
(43) Date of publication of application: **16.09.2009**
(21) Application number: 08002169.4
(22) Date of filing: 06.02.2008
(51) Int. Cl.: A23L 1/302, A23L 1/00

(54) **Use of a pulverulent composition to prepare a power or a food product**

(71) Applicant: Fortitech Europe ApS, 4621 Gadstrup (DK)
(72) Inventor: Touillon, Nicolas, 4521 Gadstrup (DK)
(74) Representative: Grosset-Fournier, Chantal Catherine

(57) **Abstract**

The invention relates to the use of a pulverulent composition having instantaneous dispersion and solubility properties in aqueous solutions and comprising: riboflavin, a first saccharide possessing hydrocolloidal properties, and/or a second saccharide, to prepare a food product, said food product being a liquid food products, a solid food products, a semi-liquid food products or a powder, said powder being liable to be instantaneously dispersed in an aqueous solution to provide a beverage.

## Description

The present invention relates to the use of a pulverulent composition to prepare a powder or a food product

Vitamin B2 (Riboflavin) does not disperse well in aqueous solution (French Patent FR 1 211 662). When this vitamin is added to food products or drinks to prepare riboflavin supplemented food product or drinks, some lumps or spots are observed on the surface of the food product or on the wall of the container containing the drink, which is not pleasant for the consumer.

Up to now, there is no appropriate pulverulent composition liable to be used in condition ensuring instantaneous dispersion and solubilising properties.

One of the aspects of the present invention is to provide a food product containing a pulverulent composition having instantaneous dispersion and solubility properties in aqueous solutions.
One of the aspects of the present invention is to provide a powder containing a pulverulent composition having instantaneous dispersion and solubility properties in aqueous solutions, said powder being liable to be instantaneously dispersed in an aqueous solution to provide a beverage.
One of the aspects of the present invention is to provide a process to make or reconstitute a beverage from said powder.

The present invention relates to the use of a pulverulent composition having instantaneous dispersion and solubility properties in aqueous solutions and comprising:
- less than 96% in weight, preferably from 10 to 80%, and more preferably from 20% to 70% of riboflavin, and,
- a first saccharide possessing hydrocolloidal properties, and/or
- a second saccharide, chosen among the group consisting of
- monosaccharide such as fructose, glucose, galactose,
- disaccharide such as saccharose, sucrose, lactose, maltose, trehalose and cellobiose, and,
- polysaccharide such as glucose syrup, dextrin, inulin, cellulose, glycogen, starch or modified starch, fructooligosaccharide (FOS), to prepare :

- a food product, said food product being:

- liquid food products chosen among the group consisting of infantile milk, milk, acidified milk products, beverages, oils, or,
- solid food products chosen among the group consisting of cereals chosen among the group consisting of porridge, bakery, pasta, noodles, rice or confectionary products,
- semi-liquid food products chosen among the group consisting of spreads, jam, or,
- a powder,
   said powder comprising at least a foodstuff being chosen among the group consisting of powder milk, cocoa powder, instant powder drinks, meal replacement products or effervescent products.
   said powder being liable to be instantaneously dispersed in an aqueous solution to provide a beverage.
   By "pulverulent composition" is meant a powdered composition.
   By "aqueous solutions" is meant a solution in which the major component is water.
   By "instantaneous dispersion in aqueous solutions" is meant that when the pulverulent composition is poured into an aqueous solution, it disperses entirely and instantaneously, For instance, for 10g of powder added to 100ml distilled water at room temperature, the dispersibility is characterised by the time needed for the powder to be wet by the water and disperse into the water, not standing at the surface of the water. If the time needed for wettability by water and dispersion is shorter than 15 seconds the dispersibility is considered as instant.
   By "instantaneous solubility properties in aqueous solutions" is meant that the pulverulent composition dissolves entirely in the aqueous medium to make a solution. For instance, for 10g of powder added to 100ml distilled water at room temperature, the solubility is characterised by the quantity of lumps or insoluble particles in the water 10 mn after adding the powder in the water. No lumps at the surface and no insoluble particles at the bottom of the recipient.

By "saccharide" is meant sugar, also called carbohydrates. Monosaccharide consist of one sugar. Examples of monosaccharides include glucose (dextrose), fructose, galactose, xylose and ribose. Monosaccharides are the building blocks of :
- disaccharides (consisting of two sugar) like sucrose (common sugar) and,
- polysaccharides (such as cellulose and starch). Polysaccharides are polymers made up of many monosaccharides joined together by glycosidic bonds.
   By "hydrocolloidal properties" is meant forming colloidal dispersion, and or forming colloidal gel when dispersed in water.

The advantage of using a pulverulent composition to prepare a food product or a powder is that hardly no dots or spots of riboflavin are observed in the foodstuff or the beverage reconstituted from the powder, or on their surface, contrary to what happens when this foodstuff or beverage contains pure riboflavin instead of the pulverulent composition.

The present invention relates to the use as described above, wherein the first saccharide is octenyl succinate starch and the second saccharide is glucose syrup.

By "octenyl succinate starch" is meant octenyl succinate starch with a degree of substitution comprised between 0.01 and 0.10, preferably between 0.01 and 0.04, and more preferably around 0.02.

The present invention relates to the use of a pulverulent composition as described above, wherein:
- the macroscopic density of said pulverulent composition is from 300 to 800 g/l, preferably 400 to 700 g/l , and more preferably 400 to 600 g/l,
- the flow index determined by Flowdex method of said pulverulent composition is from 4 to 20, preferably from 5 to 10, more preferably around 8,
- said pulverulent composition comprises granules,
- the mean diameter of said granule is from 10 µm to 500 µm, preferably 20 to 100 µm, more preferably 30 to 50 µm,
- the span (DV05) of said granules is from 0.2 to 3.0, preferably 1.0 to 2.0, more preferably from 1.2 to 1.7,

The "Flowdex method" measures the flowability of a powder measuring the smallest hole diameter of a stainless steel disc where the powder can flow, which is the flow index. Flowdex device is composed of a cylinder with the interchangeable discs with holes of various diameters at the bottom. The determination of fluidity is based on the capacity of the powder to fall freely by a hole in the disc. The powder is carefully charged on the top of the hole. If the hole through which a powder falls freely is small, the flowability is good, when the hole is larger, the worse is the flowability.

The method Flowdex initially developed and discussed by Gioia A. Intrinsic flowability: a new technology for powder flowability classification, Pharmaceut. Technol. (1980) 1-4

Span is a dispersion parameter obtained in granulometer measurement by laser diffraction using three median parameters of the particle distribution curve criteria (90% Passing diameter D(v,0.90), 50% passing diameter D(v,0.50) and 10% passing diameter D(v,0.10)) as follow: Span = [D(v,0.10) - D(v,0.90)] / D(v,0.50).

In another embodiment, the present invention relates to a food product containing from 0.1 mg/kg to 1500 mg/kg, preferably 1 mg/kg to 400 mg/kg, more preferably 4 mg/kg to 40 mg/kg of a pulverulent composition comprising:
- less than 96% in weight, preferably from 10 to 80%, and more preferably from 20% to 70% of riboflavin, and,
- a first saccharide possessing hydrocolloidal properties, and/or
- a second saccharide, chosen among the group consisting of
- monosaccharide such as fructose, glucose, galactose,
- disaccharide such as saccharose, sucrose, lactose, maltose, trehalose and cellobiose, and,
- polysaccharide such as glucose syrup, dextrin, inulin, cellulose, glycogen and starch, or modified starch, fructooligosaccharide (FOS),
   said pulverulent composition having instantaneous dispersion and solubility properties in aqueous solutions, said food product being:

- either a liquid food product being chosen among the group consisting of infantile milk, milk, acidified milk products, beverages and oils, said riboflavin does not form any deposit on the wall of a container which would contain said liquid food product,
- or, a solid food product being chosen among the group consisting of cereals such as porridge, bakery, pasta, noodles, rice or confectionary products,
- or a semi-liquid food product being chosen among the group consisting of spreads and jam,
- or a powder containing at least a foodstuff being chosen among the group consisting of powder milk, cocoa powder, instant powder drinks, meal replacement products or effervescent products,
   said powder being liable to be instantaneously dispersed in an aqueous solution to provide a beverage.

The present invention relates to a food product as described above, wherein :
- the macroscopic density of said pulverulent composition is from 300 to 800 g/l, preferably 400 to 700 g/l , and more preferably 400 to 600 g/l,
- the flow index determined by Flowdex method of said pulverulent composition is from 4 to 20, preferably from 5 to 10, more preferably around 8,
- said pulverulent composition comprises granules,
- the mean diameter of said granule is from 10 µm to 500 µm, preferably 20 to 100 µm, more preferably 30 to 50 µm,
- the span (DV05) of said granules is from 0.2 to 3.0, preferably 1.0 to 2.0, more preferably from 1.2 to 1.7.

In a further embodiment, the present invention relates to a powder containing:
- from 0.001 g/kg to 999 g/kg, preferably from 0.01 g/kg to 500 g/kg, more preferably from 0.1 g/kg to 100 g/kg of a pulverulent composition comprising:

- less than 96% in weight, preferably from 10 to 80%, and more preferably from 20% to 70% of riboflavin, and,
- a first saccharide possessing hydrocolloidal properties, and/or
- a second saccharide, chosen among the group consisting of
- monosaccharide such as fructose, glucose, galactose,
- disaccharide such as saccharose, sucrose, lactose, maltose, trehalose and cellobiose, and,
- polysaccharide such as glucose syrup, dextrin, inulin, cellulose, glycogen, starch and modified starch, fructooligosaccharide (FOS), said pulverulent composition having instantaneous dispersion and solubility properties in aqueous solutions, and,
- at least a foodstuff being chosen among the group consisting of powder milk, cocoa powder, instant powder drinks, meal replacement products or effervescent products, said powder being liable to be instantaneously dispersed in an aqueous solution to provide a beverage.

The present invention relates to a powder as described above, wherein:
- the macroscopic density of said pulverulent composition is from 300 to 800 g/l, preferably 400 to 700 g/l , and more preferably 400 to 600 g/l,
- the flow index determined by Flowdex method of said pulverulent composition is from 4 to 20, preferably from 5 to 10, more preferably around 8,
- said pulverulent composition comprises granules,
- the mean diameter of said granule is from 10 µm to 500 µm, preferably 20 to 100 µm, more preferably 30 to 50 µm,
- the span (DV05) of said granules is from 0.2 to 3.0, preferably 1.0 to 2.0, more preferably from 1.2 to 1.7,
   The present invention relates to a powder as described above, wherein said powder is liable to be dissolved in an aqueous solution to provide a beverage, and wherein the foodstuff is an instant powder drink or an effervescent product.

In this embodiment, as the powder is soluble in the aqueous solution, the beverage reconstituted by mixing the powder with an aqueous solution is a homogeneous solution just after said mixing is done. No suspension, spot, dot or emulsion of riboflavin is observed in the beverage.

In another embodiment, the present invention relates to a process of preparation of a food product as described above,
wherein the food product is a liquid food product, and,
wherein the process comprises a step of instantaneously dispersing a powder as described above in an aqueous solution.

In this embodiment, the beverage which is obtained by mixing the powder according to the invention with an aqueous solution, is the liquid food product according to the invention.

The present invention also relates to a process as described above, comprising an additional phase of dissolving a powder liable to be dissolved in an aqueous solution to provide a beverage as described above, in an aqueous solution.

In this embodiment, the beverage, which is obtained by mixing the powder according to the invention with an aqueous solution and which is a homogeneous solution, is the liquid food product according to the invention.

The pulverulent composition used in the invention can be obtained by a process comprising:
1) a step of mixing riboflavin in aqueous media with at least a saccharide to obtain an aqueous phase comprising riboflavin and at least one saccharide, and,
2) possibly a step of microgrinding of the aqueous phase comprising riboflavin and at least one saccharide to obtain a microgrinded aqueous phase comprising riboflavin and at least one saccharide, and,
3) a step of atomisation of the microgrinded aqueous phase comprising riboflavin and at least one saccharide to obtain a pulverulent composition comprising riboflavin and at least one saccharide; the (possibly microgrinded) aqueous phase comprising riboflavin and at least one saccharide is poured into an atomisation tower and is transformed into the pulverulent composition;
4) a step of recovery of the pulverulent composition obtained.

The pulverulent composition used in the invention and comprising octenyl succinate starch, glucose syrup and less than 96% in weight, preferably from 10 to 80%, and more preferably from 20% to 70% of riboflavin, can be obtained by a process comprising:
1) a step of mixing riboflavin in aqueous media with octenyl succinate starch and glucose syrup to obtain an aqueous phase comprising riboflavin, octenyl succinate starch and glucose syrup, and,
2) possibly a step of microgrinding of the aqueous phase comprising riboflavin, octenyl succinate starch and glucose syrup to obtain a microgrinded aqueous phase comprising riboflavin, octenyl succinate starch and glucose syrup, and,
3) a step of atomisation of the microgrinded aqueous phase comprising riboflavin, octenyl succinate starch and glucose syrup to obtain a pulverulent composition comprising riboflavin, octenyl succinate starch and glucose syrup; the (possibly microgrinded) aqueous phase comprising riboflavin, octenyl succinate starch and glucose syrup is poured into an atomisation tower and is transformed into the pulverulent composition;
4) a step of recovery of the pulverulent composition obtained.

### FIGURES

### Figure 1

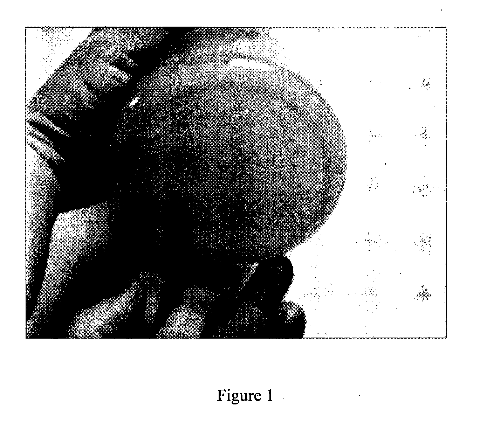

Figure 1 represents a picture of a container containing a mixture of 0.250g of pure riboflavin with 800 ml demineralised water (control). The mixture stood 20 minutes at ambient temperature after stirring.

### Figure 2

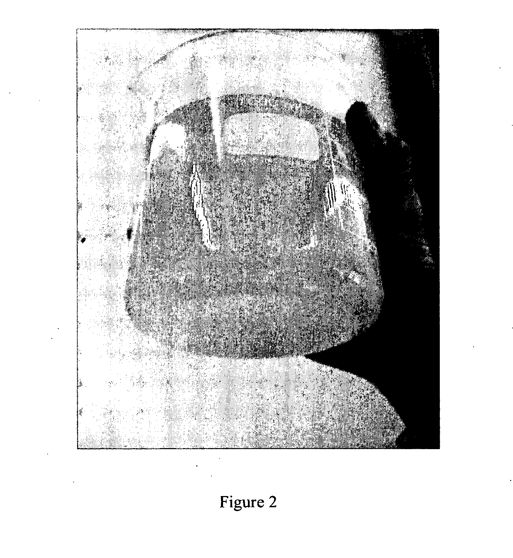

Figure 2 represents a picture of a container containing a mixture of 0.250g of a pulverulent composition containing riboflavin, octenyl succinyl starch and glucose syrup with 800 ml demineralised water. The mixture stood 20 minutes at ambient temperature after stirring.

### Figure 3

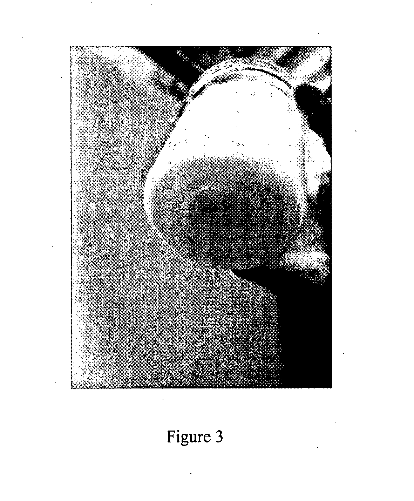

Figure 3 represents a picture of a beaker containing Sample A and 150mL of demineralised water. The mixture stood 20 minutes at ambient temperature after stirring.

### Figure 4

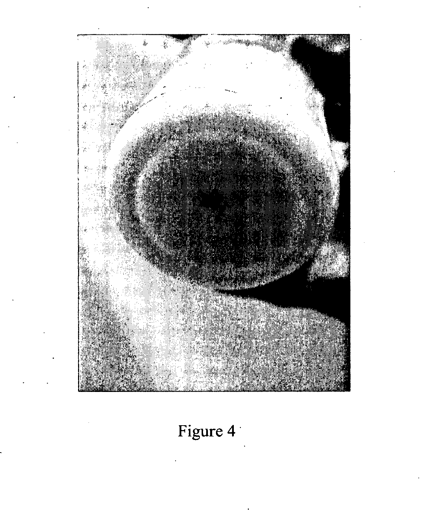

Figure 4 represents a picture of a beaker containing Sample B and 150mL of demineralised water (control). The mixture stood 20 minutes at ambient temperature after stirring.

### EXAMPLES

These results disclosed in the following examples are "qualitative" but the criteria are objective and reflect the practical testing made by the customer to qualify its raw material. In the examples hereafter, the expression Instant Riboflavin refers to the riboflavin prepared according to the above mentioned process of the invention.

### Pulverulent composition

The pulverulent composition used in the following examples contains riboflavin (43 %), octenyl succinyl starch (14,25%) and glucose syrup (42,75%).

| Ingredient | % by total weight | Raw material reference |
|---|---|---|
| Riboflavin | 43.00 | Riboflavin (Hubei Guangji Pharmaceutical) |
| OSA | 14.25 | Sodium Octenyl Succinate starch (Cerestar) |
| Glucose syrup | 42.75 | Glucose syrup DE 38 (Cerestar) |

% is based on dry matter of each component

The pulverulent composition was obtained with the following process:
1) a step of mixing riboflavin in aqueous media with octenyl succinate starch and glucose syrup to obtain an aqueous phase comprising riboflavin, octenyl succinate starch and glucose syrup, and,
2) possibly a step of microgrinding of the aqueous phase comprising riboflavin, octenyl succinate starch and glucose syrup to obtain a microgrinded aqueous phase comprising riboflavin, octenyl succinate starch and glucose syrup, and,
3) a step of atomisation of the microgrinded aqueous phase comprising riboflavin, octenyl succinate starch and glucose syrup to obtain a pulverulent composition comprising riboflavin, octenyl succinate starch and glucose syrup; the (possibly microgrinded) aqueous phase comprising riboflavin, octenyl succinate starch and glucose syrup is poured into an atomisation tower and is transformed into the pulverulent composition;
4) a step of recovery of the pulverulent composition obtained.
   Said pulverulent composition has instantaneous dispersion and solubility properties in aqueous solutions.

### Example 1: Instantaneously dispersibility of the pulverulent composition in aqueous solution

0.250 g of pure riboflavin (control) is poured in 800 ml demineralised water at ambient temperature. The mixture is stirred 10 times stirring clockwise, 10 times stirring counter clockwise with a spoon and then allowed to stand at ambient temperature for 20 minutes. A picture of the mixture container is then taken (Figure 1).

0.250 g of a pulverulent composition containing riboflavin, octenyl succinyl starch and glucose syrup is poured in 800 ml demineralised water at ambient temperature. The mixture is stirred 10 times stirring clockwise, 10 times stirring counter clockwise with a spoon and then allowed to stand at ambient temperature for 20 minutes. A picture of the mixture container is then taken (Figure 2).

No lumps are observed in Figure 2. The pulverulent composition is well dispersed, and no precipitate is observed at the bottom. On the contrary a precipitate of riboflavin is observed in the beaker containing pure riboflavin and water as a clear darker orange ring (Figure 1).

The pulverulent composition dissolved in water gives a solution without lumps, and will be useable for applications where a dissolution step of the pulverulent composition is required to prepare the food product.

### Example 2: Vitamin supplemented infant formula

This example illustrates the preparation of a powder (i.e. vitamin supplemented infant formula) according to the invention and stability of a dispersion of this powder in an aqueous solution (water).

### 2.1. Material

The infant formula is a powder which, when reconstituted with water, is intended to have a nutritional profile as close as possible to human milk. In Europe the nutritional composition is regulated through EU Directives. The infant formula used does not contain the vitamin premix.

The vitamin premix used is a blend of different vitamins produced according to a specification for nutritional composition. It is a powder based blend of Vitamin A, Vitamin D3, Vitamin E, Vitamin K1, Sodium Ascorbate, Thiamine Mononitrate, Instant Riboflavin, Niacinamide, Pyridoxine Hydrochloride, Biotin, Folic Acid, Potassium Iodide, Maltodextrin as carrier for standardization. Sodium ascorbate (Vitamin C) and Maltodextrin are the major components.

### 2.2. Preparation of the vitamin supplemented infant formula

Sample A is prepared by shaking 54 mg of the vitamin premix (containing the pulverulent composition) and 21.61 g of the infant formula in a plastic bag (30 times shaken).

### 2.3. Dispersion of the vitamin supplemented infant formula in an aqueous solution

Sample A is poured in 150mL of demineralised water at 40°C in a 250 ml beaker. The mixture is mixed by hand (10 times stirring clockwise / 10 times stirring counter clockwise with a spoon). The mixture is poured through a coarse sieve. The mixture is allowed to stand for 20 minutes at room temperature and then a picture of the beaker is taken (Figure 3).

The same process is repeated using Sample B, which is commercial infant powder milk (Nestlé^{®} Nido market sample) replacing Instant riboflavin with "ordinary" riboflavin, which was not obtained through a process of atomization (Figure 4). Sample B is tested as a control.

No dots appeared on the beaker containing sample A, whereas more than 6 dots are observed on the beaker containing sample B.

Sample A, containing the pulverulent composition, clearly shows superior properties/behavior in term of solubility in the given applications.

### Example 3: Vitamin supplemented milk from vitamin supplemented powder milk or vitamin supplemented infant formula and warm water (40 °C)

This example illustrates the preparation of a powder according to the invention (i.e. vitamin supplemented powder milk) and the stability of the dispersion (i.e. vitamin supplemented milk) of said powder in an aqueous solution (water).

### 3.1. Material

The vitamin premixes used are a blend of different vitamins produced according to a specification for nutritional composition. It is a powder based blend of Vitamin A, Vitamin D3, Vitamin E, Vitamin K1, Sodium Ascorbate, Thiamine Mononitrate, Niacinamide, Pyridoxine Hydrochloride, Biotin, Folic Acid, Potassium Iodide, Maltodextrin as carrier for standardization and either pure riboflavin or Instant riboflavin. Sodium ascorbate (Vitamin C) and Maltodextrin are the major components.
Table 1 summarizes the different compositions of the vitamin premixes used.

Vitamin premix 1 contains the pulverulent composition obtained by atomization. It comprises 0.335% of riboflavin and 68% of ascorbic acid (Vitamin C).
Vitamin premix 2 contains the pulverulent composition obtained by atomization. It comprises 0.35% of riboflavin and 68% of sodium ascorbate (Vitamin C).
Vitamin premix 3 contains pure riboflavin (which was not subjected to the atomization process). It comprises 0.335% of riboflavin and 68% of ascorbic acid (Vitamin C).
Vitamin premix 4 contains pure riboflavin, (which was not subjected to the atomization process). It comprises 0.35% of riboflavin and 68% of sodium ascorbate (Vitamin C).

**Table 1: Composition of the different vitamin premixes**

| Vitamin premix | Type of riboflavin | Ratio of riboflavin | Ratio of Vitamin C | Vitamin C form |
|---|---|---|---|---|
| 1 | from pulverulent composition | 0.335% | 68% | ascorbic acid |
| 2 | from pulverulent composition | 0.35% | 68% | sodium ascorbate |
| 3 (control) | pure (not subjected to atomization) | 0.335% | 68% | ascorbic acid |
| 4 (control) | pure (not subjected to atomization) | 0.35% | 68% | sodium ascorbate |

The powder milk used is either full cream milk powder or an infant formula as described in Example 2.

### 3.2. Preparation of a powder according to the invention and stability of the dispersion of said powder in an aqueous solution (water).

a) Process using full cream milk powder
   51 mg of vitamin premix and 21.95 g of full cream milk powder are shaken in a plastic bag (20 times shaken) and are then poured through a funnel into 150 ml of demineralised water at 40°C in a glass tube. The mixture is mixed in a rotating drum (15 seconds at 60 rpm) and then poured into a 250 ml beaker. The presence of orange spots on the bottom of the beaker is checked.
b) Process using the infant formula
   54 mg of vitamin premix and 21.61 g of the infant formula are shaken in a plastic bag (30 times shaken) and are then poured into 150 ml of demineralised water at 40°C in a 250 ml beaker. The mixture is mixed by hand (10 times stirring clockwise, 10 times stirring counter clockwise) and then sieve is poured over. The number of orange spots on the bottom of the beaker is counted.

### 3.3. Results

Results are summarized in table 2. The less there are orange dots (i.e. riboflavin not dissolved), the better the dissolution is.

The vitamin premixes containing the pulverulent composition clearly show superior properties/behavior in term of solubility in the given applications.

**Table 2: Results expressed as the presence or the number of dots observed on the walls of the beaker. nd = not determined**

| Test | Premix | Type of riboflavin | Supplier of riboflavin (or of pulverulent composition containing it) | full cream milk powder | Infant formula | |
|---|---|---|---|---|---|---|
| | | | | presence of dots | number of dots | |
| | | | | | Trial 1 | Trial 2 |
| 1 | 1 | from pulverulent composition | Innov'ia | nd | 0 | 0 |
| 2 | 1 | from pulverulent composition | Innov'ia | NO | 0 | 0 |
| 3 | 2 | from pulverulent composition | Innov'ia | nd | 0 | 0 |
| 4 (Control) | 4 | pure (not subjected to atomization) | BASF FP | NO | 1-3 | 1-3 |
| 5 (Control) | 3 | pure (not subjected to atomization) | BASF FP | YES | 1-3 | 0 |
| 6 (Control) | 4 | pure (not subjected to atomization) | Hubei regular | YES | >4 | >4 |
| 7 (Control) | 3 | pure (not subjected to atomization) | Hubei regular | NO | >4 | >4 |

### Example 4: Vitamin supplemented powder cereals

This example illustrates the preparation of a powder according to the invention (i.e.vitamin supplemented powder cereals) and the stability of a dispersion of said powder in an aqueous solution (milk).

### 4.1. Material

The vitamin premixes used are a blend of different vitamins produced according to a specification for nutritional composition. It is a powder based blend of Vitamin A, Vitamin D3, Vitamin E, Vitamin K1, Sodium Ascorbate, Thiamine Mononitrate, Niacinamide, Pyridoxine Hydrochloride, Biotin, Folic Acid, Potassium Iodide, Maltodextrin as carrier for standardization and either pure riboflavin or Instant riboflavin. Sodium ascorbate (Vitamin C) and Maltodextrin are the major components.

Vitamin premix 1 contains the pulverulent composition obtained by atomization. It comprises 0.335% of riboflavin and 68% of ascorbic acid (Vitamin C).
Vitamin premix 3 contains pure riboflavin (which was not subjected to the atomization process). It comprises 0.335% of riboflavin and 68% of ascorbic acid (Vitamin C).

The infant cereal powder is provided by Nestlé^{®}.

### 4.2. Preparation of a powder according to the invention and stability of the dispersion of said powder in an aqueous solution (wann milk).

The vitamin supplemented infant cereal powder is dispersed in warm milk in two different containers to repeat the consumer habit: either in a plate or in a bottle (baby's bottle).

Vitamin supplemented infant cereal powder with two different ratios of vitamin premix 1 (0.25% or 1%) are prepared.
a) Plate Preparation
   * Plate 1
      0.25 % vitamin premix 1 is added to 25 g of infant cereal powder. 160 ml milk heated to 55°C is then added. Visual evaluation is performed just after the addition of milk and 10 minutes after.
   * Plate 2
      1 % vitamin premix 1 is added to 25 g of infant cereal powder. 160 ml milk heated to 55°C is then added. Visual evaluation is performed just after the addition of milk and 10 minutes after.
b) Bottle preparation
   * Bottle 1:
      0.25 % vitamin premix is added to 16 g of infant, cereal powder and poured into bottles. 160 ml milk heated to 55°C is then added. The bottle is shaken for about 10 seconds. The bottom of the bottle is inspected for irregularities directly after preparation and after 5 minutes standing.
   * Bottle 2:
      I % vitamin premix was added to 16 g of infant cereal powder and poured into bottles.
         160 ml milk heated to 55°C is then added. The bottle is shaken for about 10 seconds. The bottom of the bottle is inspected for irregularities directly after preparation and after 5 minutes standing.
c) Results

Table 3 summarizes the results expressed as the number of spots observed on the plate or the bottle using vitamin premix 1, which contains the pulverulent composition.

**Table 3: Presence of spots observed on the plate or the bottle using vitamin premix 1, which contains the pulverulent composition.**

| | | Plate | | Bottle | |
|---|---|---|---|---|---|
| | | 1 | 2 | 1 | 2 |
| Time | just after add of milk | 0 | 0 | 0 | 0 |
| | 5 min after add of milk | - | - | 0 | 0 |
| | 10 min after add of milk | 0 | 0 | - | - |

No spots are detected when 25 g infant cereal powder (neither in the test with 0.25% vitamin premix 1 nor in the test with 1.0% vitamin premix 1) are mixed into warm milk and left at a plastic plate. Visual evaluation is performed after 0 minutes and after 10 minutes.
No spots are detected when 16 g infant cereal powder (neither in test with 0.25% vitamin premix 1 nor in test with 1.0% vitamin premix 1) are mixed into warm milk and shaken. Visual evaluation is performed after 0 minutes and after 5 minutes.

### 4.3. Comparison with vitamin supplemented infant cereal powder containing "pure" riboflavin

The same process of preparation is repeated to obtain the plate or the bottle.

Table 4 summarizes the results expressed as the number of spots observed on the plate using vitamin premix 1, which contains the pulverulent composition or vitamin premix 3, which contains pure riboflavin (which was not subjected to atomization).

**Table 4: Presence of spots observed on the plates using vitamin premix 1, which contains Instant Riboflavin and premix 3 containing pure riboflavin.**

| Test | Premix | Type of riboflavin | Supplier of riboflavin (or of pulverulent composition containing it) | Plates | |
|---|---|---|---|---|---|
| | | | | 1 | 2 |
| 1 | 1 | from pulverulent composition | Innov'ia | 0 | 0 |
| 2 | 3 | pure (not subjected to atomization) | BASF FP | 0 | 1-3 |
| 3 | 3 | pure (not subjected to atomization) | Hubei regular | >4 | >4 |

The pulverulent composition shows superior properties/behaviour in term of solubility of riboflavin in the given applications.

### Example 5 : Effervescent vitamin

This example illustrates the preparation of a powder according to the invention (i.e. effervescent vitamin) and the stability of a solution of said powder in an aqueous solution (water).

Yellow spots are observed on the walls of the container containing the solution of the effervescent vitamin containing "pure" riboflavin in water, which means that riboflavin is not well dispersed. By contrast fewer spots are observed on the walls of the container containing the solution of the effervescent vitamin containing the pulverulent composition in water, which means that riboflavin is better dispersed.

### Example 6: Vitamin supplemented instant powder drink

This example illustrates the preparation of a powder according to the invention (i.e. vitamin supplemented instant powder drink) and the stability of a solution (i.e. drink) of said powder in an aqueous solution (water).

Yellow spots are observed on the walls of the container containing the solution of the vitamin supplemented instant powder drink containing "pure" riboflavin in water, which means that riboflavin is not well dispersed. By contrast fewer spots are observed on the walls of the container containing the solution of the vitamin supplemented instant powder drink containing the pulverulent composition in water, which means that riboflavin is better dispersed.

### Example 7: Vitamin supplemented bakery product

This example illustrates the preparation of a food product according to the invention (i.e. vitamin supplemented bakery product, like bread or biscuits).

Yellow spots are observed on the vitamin supplemented bakery product made from a preparation containing "pure" riboflavin, which means that riboflavin is not well dispersed. By contrast fewer spots are observed on the vitamin supplemented bakery product made from a preparation containing the pulverulent composition, which means that riboflavin is better dispersed.

### Example 8: Vitamin supplemented jam

This example illustrates the preparation of a food product according to the invention (i.e. vitamin supplemented jam).

Yellow spots are observed on the vitamin supplemented jam made from a preparation containing "pure" riboflavin, which means that riboflavin is not well dispersed. By contrast fewer spots are observed on the vitamin supplemented jam made from a preparation containing the pulverulent composition, which means that riboflavin is better dispersed.

### Example 9: Vitamin supplemented confectionary

This example illustrates the preparation of a food product according to the invention (i.e. vitamin supplemented confectionary).

Yellow spots are observed on the vitamin supplemented confectionary made from a preparation containing "pure" riboflavin, which means that riboflavin is not well dispersed. By contrast fewer spots are observed on the vitamin supplemented confectionary made from a preparation containing the pulverulent composition, which means that riboflavin is better dispersed.

### Example 10: Vitamin supplemented rice

This example illustrates the preparation of a food product according to the invention (i.e. vitamin supplemented rice).

Yellow spots are observed on the vitamin supplemented rice made from a preparation containing "pure" riboflavin, which means that riboflavin is not well dispersed. By contrast fewer spots are observed on the vitamin supplemented rice made from a preparation containing the pulverulent composition, which means that riboflavin is better dispersed.

### Example 11: Vitamin supplemented noodles/pasta

This example illustrates the preparation of a food product according to the invention (i.e. vitamin supplemented noodles).

Yellow spots are observed on the vitamin supplemented noodles made from a preparation containing "pure" riboflavin, which means that riboflavin is not well dispersed. By contrast fewer spots are observed on the vitamin supplemented noodles made from a preparation containing the pulverulent composition, which means that riboflavin is better dispersed.

## Claims

1. Use of a pulverulent composition having instantaneous dispersion and solubility properties in aqueous solutions and comprising:
- less than 96% in weight, preferably from 10 to 80%, and more preferably from 20% to 70% of riboflavin, and,
- a first saccharide possessing hydrocolloidal properties, and/or
- a second saccharide, chosen among the group consisting of
- monosaccharide such as fructose, glucose, galactose,
- disaccharide such as saccharose, sucrose, lactose, maltose, trehalose and cellobiose, and,
- polysaccharide such as glucose syrup, dextrin, inulin, cellulose, glycogen, starch or modified strach, fructooligosaccharide (FOS), to prepare :
- a food product,
said food product being:
- liquid food products chosen among the group consisting of infantile milk, milk, acidified milk products, beverages, oils, or,
- solid food products chosen among the group consisting of cereals chosen among the group consisting of porridge, bakery, pasta, noodles, rice, or confectionary products,
- semi-liquid food products chosen among the group consisting of spreads, jam, or,
- a powder, said powder comprising at least a foodstuff being chosen among the group consisting of powder milk, cocoa powder, instant powder drinks, meal replacement products or effervescent products. said powder being liable to be instantaneously dispersed in an aqueous solution to provide a beverage.

2. Use according to claim 1, wherein the first saccharide is octenyl succinate starch and the second saccharide is glucose syrup.

3. Use of a pulverulent composition according to claim 1 or 2, wherein:
- the macroscopic density of said pulverulent composition is from 300 to 800 g/l, preferably 400 to 700 g/l , and more preferably 400 to 600 g/l,
- the flow index determined by Flowdex method of said pulverulent composition is from 4 to 20, preferably from 5 to 10, more preferably around 8,
- said pulverulent composition comprises granules,
- the mean diameter of said granule is from 10 µm to 500 µm, preferably 20 to 100 µm, more preferably 30 to 50 µm,
- the span (DV05) of said granules is from 0.2 to 3.0, preferably 1.0 to 2.0, more preferably from 1.2 to 1.7,

4. Food product containing from 0.1 mg/kg to 1500 mg/kg, preferably 1 mg/kg to 400 mg/kg, more preferably 4 mg/kg to 40 mg/kg of a pulverulent composition comprising:
- less than 96% in weight, preferably from 10 to 80%, and more preferably from 20% to 70% of riboflavin, and,
- a first saccharide possessing hydrocolloidal properties, and/or
- a second saccharide, chosen among the group consisting of
- monosaccharide such as fructose, glucose, galactose,
- disaccharide such as saccharose, sucrose, lactose, maltose, trehalose and cellobiose, and,
- polysaccharide such as glucose syrup, dextrin, insulin, cellulose, glycogen and starch or modified starch, fructooligosaccharide (FOS), said pulverulent composition having instantaneous dispersion and solubility properties in aqueous solutions, said food product being:
- either a liquid food product being chosen among the group consisting of infantile milk, milk, acidified milk products, beverages and oils,
said riboflavin does not form any deposit on the wall of a container which would contain said liquid food product,
- or, a solid food product being chosen among the group consisting of cereals such as porridge, bakery, pasta, noodles, rice or confectionary products,
- or a semi-liquid food product being chosen among the group consisting of spreads and jam,
- or a powder containing at least a foodstuff being chosen among the group consisting of powder milk, cocoa powder, instant powder drinks, meal replacement products or effervescent products,
said powder being liable to be instantaneously dispersed in an aqueous solution to provide a beverage.

5. Food product according to claim 4, wherein :
- the macroscopic density of said pulverulent composition is from 300 to 800 g/l, preferably 400 to 700 g/l , and more preferably 400 to 600 g/l,
- the flow index determined by Flowdex method of said pulverulent composition is from 4 to 20, preferably from 5 to 10, more preferably around 8,
- said pulverulent composition comprises granules,
- the mean diameter of said granule is from 10 µm to 500 µm, preferably 20 to 100 µm, more preferably 30 to 50 µm,
- the span (DV05) of said granules is from 0.2 to 3.0, preferably 1.0 to 2.0, more preferably from 1.2 to 1.7.

6. Powder containing :
- from 0.001 g/kg to 999 g/kg, preferably from 0.01 g/kg to 500 g/kg, more preferably from 0.1 g/kg to 100 g/kg of a pulverulent composition comprising:
- less than 96% in weight, preferably from 10 to 80%, and more preferably from 20% to 70% of riboflavin, and,
- a first saccharide possessing hydrocolloidal properties, and/or
- a second saccharide, chosen among the group consisting of
- monosaccharide such as fructose, glucose, galactose,
- disaccharide such as saccharose, sucrose, lactose, maltose, trehalose and cellobiose, and,
- polysaccharide such as glucose syrup, dextrin, inulin, cellulose, glycogen, starch and modified starch, fructooligosaccharide (FOS), said pulverulent composition having instantaneous dispersion and solubility properties in aqueous solutions, and,
- at least a foodstuff being chosen among the group consisting of powder milk, cocoa powder, instant powder drinks, meal replacement products or effervescent products, said powder being liable to be instantaneously dispersed in an aqueous solution to provide a beverage.

7. Powder according to claim 6, wherein :
- the macroscopic density of said pulverulent composition is from 300 to 800 g/l, preferably 400 to 700 g/l , and more preferably 400 to 600 g/l,
- the flow index determined by Flowdex method of said pulverulent composition is from 4 to 20, preferably from 5 to 10, more preferably around 8,
- said pulverulent composition comprises granules,
- the mean diameter of said granule is from 10 µm to 500 µm, preferably 20 to 100 µm, more preferably 30 to 50 µm,
- the span (DV05) of said granules is from 0.2 to 3.0, preferably 1.0 to 2.0, more preferably from 1.2 to 1.7.

8. Powder according to any of claims 6 and 7, wherein said powder is liable to be dissolved in an aqueous solution to provide a beverage, and wherein the foodstuff is an instant powder drink or an effervescent product.

9. Process of preparation of a food product according to any of claims 4 and 5,
wherein the food product is a liquid food product, and,
wherein the process comprises a step of instantaneously dispersing a powder according to any of claim 5 to 7 in an aqueous solution.

10. Process according to claim 9, comprising an additional phase of dissolving a powder according to claim 8 in an aqueous solution.
